# FASCICULE DE BREVET EUROPEEN

(11) **EP 3 060 793 B1**
(45) Date de publication et mention de la délivrance du brevet: **28.06.2017**
(21) Numéro de dépôt: 15706494.0
(22) Date de dépôt: 23.01.2015
(51) Int. Cl.: F03B 13/20

(54) **CONVERTISSEUR DE PUISSANCE HOULOMOTRICE EXPLOITANT LE MOUVEMENT ORBITAL D'UN CHARIOT PESANT**
WELLENKRAFTWERK UMFASSEND EINEN SCHWERKÖRPER MIT ORBITALBEWEGUNG
WAVE ENERGY POWER CONVERTER EXPLOITING THE ORBITAL MOVEMENT OF A HEAVY CARRIAGE

(30) Priorité: 12.02.2014 FR 1400383
(43) Date de publication de la demande: 31.08.2016
(73) Titulaire: Elefant, Felix, 94120 Fontenay-sous-Bois (FR); Elefant, Alexandre, 94120 Fontenay-sous-Bois (FR)
(72) Inventeur: Elefant, Felix, 94120 Fontenay-sous-Bois (FR); Elefant, Alexandre, 94120 Fontenay-sous-Bois (FR)
(74) Mandataire: Cabinet Plasseraud
(86) Numéro de dépôt international: PCT/FR2015/000023
(87) Numéro de publication internationale: WO 2015/121551

(56) Documents cités:
- WO-A2-2012/007639
- FR-A1- 2 943 742
- FR-A1- 2 991 397
- GB-A- 905 446

## Description

À ce jour, des systèmes houlomoteurs variés ont été conçus ou développés, sans donner lieu à des applications conformes aux performances attendues.

La comparaison des différentes familles d'inventions existantes permet d'identifier les caractéristiques les plus avantageuses au regard des possibilités de développement fonctionnel et économique, et d'analyser leurs limitations respectives, en vue d'inventer un dispositif nouveau remplissant les conditions opérationnelles de réalisation et d'exploitation nécessaires à une conversion électrique efficiente de la puissance des vagues.

Il peut être ainsi constaté que le principe d'un dispositif entièrement contenu dans une même entité flottante évite les problèmes de fondation en mer, l'absence d'organes externes étant, de surcroit, un gage de robustesse et d'adaptation du système au milieu marin.

Par ailleurs, certaines formes de conversion électromécanique directe, sans organe de transmission hydraulique, permettent l'exploitation du mouvement d'un solide, suivant une réalisation et un fonctionnement simples.

Parmi les brevets exploitant en tout ou partie ce mode de conversion, peuvent être cités:
- US3231749 (publié le 25/01/1966) : une entité flottante tangue au gré des vagues, et transmet son mouvement à un excentrique, en oscillation pendulaire dans un plan horizontal,
- US1584293 (1925) et US4266143 (publié le 05/05/1981) : un ou plusieurs excentriques effectuent une rotation complète, sans rebroussement, dans un plan horizontal, sous l'effet de l'oscillation des vagues.

Les limitations rencontrées par ce type de systèmes dans leur fonctionnement concernent principalement :
- la difficulté à tirer le meilleur parti de la forme des vagues afin de mettre en mouvement le dispositif,
- la difficile synchronisation du dispositif avec la fréquence des vagues, s'agissant d'entretenir un régime de fonctionnement régulier pour le générateur,
- les pertes liées aux frottements entre des différentes pièces,
le cumul de ces limitations se traduisant par un rendement d'ensemble réduit dans une logique de production.

Dans ce contexte, la présente invention définit un ensemble de solutions originales offrant en particulier plusieurs degrés de souplesse pour optimiser la synchronisation du dispositif d'extraction de puissance avec la fréquence des vagues, le recours à des organes techniques présentant un faible frottement, le recours à des techniques d'ingénierie et de fabrication courantes, ainsi que l'emploi de matériaux de faible valeur, voire de matériaux de récupération, et une maintenance minimale et de faible technicité.

Le module houlomoteur, objet de l'invention, est essentiellement constitué d'une enceinte flottante, conçue pour contenir en totalité un dispositif de conversion électromécanique actionné par l'oscillation des vagues.

La coque, ou partie immergée de l'enceinte, est amarrée, ou maintenue en position par un dispositif motorisé. Elle est pourvue d'un jeu de dérives qui assure le maintien de son orientation face au front de vagues, et possède un profil particulier, favorisant le tangage du module au gré de la houle.
Nota: pour faciliter la description, la partie de la coque entrant en premier en contact avec une vague incidente sera désignée, dans le présent document, comme l'avant du module, ou sa proue, et la partie opposée sera désigné comme l'arrière du module.

Dans l'enceinte, une masse excentrique se présente sous la forme d'un chariot pesant pouvant se déplacer le long d'un jeu de rails circulaires. Ce type de disposition permet de se dispenser d'un axe porteur central; elle évite ainsi le frottement que provoquerait le moment considérable du poids de l'excentrique au niveau du pivot central.

Le mouvement de tangage de l'enceinte provoque l'inclinaison du plan des rails, et donc la mise en mouvement du chariot sous l'effet de son poids. Afin de s'affranchir des problèmes électromécaniques propres à la présence de points d'arrêt ou de points de rebroussement sur la trajectoire, tels qu'ils s'observent notamment dans un mouvement pendulaire, l'invention tire profit d'une orbite complète et ininterrompue du chariot autour de l'axe central (3).

L'énergie cinétique gagnée par la masse excentrique au cours de son mouvement est fonction de l'énergie potentielle de pesanteur que lui concède la vague en provoquant l'inclinaison du plan de sa trajectoire.

En raison de la faible amplitude de l'inclinaison de l'orbite, les frottements constituent une limitation majeure, pouvant même devenir tout à fait rédhibitoire en deçà d'une certaine hauteur de vagues. À cet égard, l'invention s'attache à proposer un ensemble de dispositions favorisant la diminution des pertes par frottement au passage du chariot.

L' énergie cinétique accumulée est convertie par un générateur électrique solidaire du chariot. L'arbre du générateur est entraîné en rotation par une ou deux roues dentées engrenant sur un jeu de crémaillères coaxiales avec les rails. Des contacts glissants connectent le générateur à un redresseur électrique. Ainsi, le raccordement du module à un point de distribution à terre s'affranchit des pertes en ligne qui résulteraient d'une transmission de courant alternatif en milieu marin.

Un ballast mobile, également animé par l'action de la houle, amplifie l'inclinaison du module dans le sens de propagation des vagues, et accroît ainsi la hauteur de chute du chariot.

Le cycle de captation de puissance, qui résulte de cette inclinaison se décompose schématiquement en quatre phases:
- pendant la phase d'inclinaison croissante, sous l'effet de la vague incidente, la trajectoire du chariot est située vers la proue, où le chariot acquiert de l'énergie potentielle de pesanteur,
- lorsque l'inclinaison maximale du module est atteinte, le chariot effectue une descente accélérée, durant laquelle son énergie potentielle de pesanteur est convertie en énergie cinétique; cette phase est brève, car l'inclinaison maximale est très passagère,
- pendant la phase d'inclinaison décroissante, après basculement du module sur la crête de la vague, la trajectoire du chariot est située à proximité de l'arrière du module, où il acquiert à nouveau de l'énergie potentielle de pesanteur,
- lorsque l'inclinaison est maximale, l'arrière du module étant soulevé par la vague, le chariot accélère et convertit, de nouveau, son énergie potentielle.

L'extraction efficiente de l'énergie des vagues exige donc une variation de la vitesse du chariot : son trajet est assez long durant une phase assez brève, et assez court durant une phase assez longue.

Pour permettre un entrainement à vitesse constante de l'arbre du générateur, malgré ces fluctuations de la vitesse du chariot au cours d'un même cycle, le dispositif peut éventuellement bénéficier d'un jeu de crémaillères à pas variable, faisant office d'adaptateur mécanique, qui produit une variation continue du rapport de réduction. Un tel dispositif autorise ainsi, pour le générateur, un régime plus proche de son point de ce fonctionnement nominal.

Par ailleurs, un dispositif d'asservissement assure la synchronisation continue de la période de révolution du chariot avec la fréquence des vagues suivant sa variation dans le temps.

Des caractéristiques particulières de l'invention figurent dans la description ci-après, qui présente un exemple de réalisation, donné à titre illustratif et nullement limitatif, par référence aux dessins figurant en annexe :
- La Figure 1 représente la vue en éclaté d'un module de conversion de puissance - houlomotrice.
- La Figure 2 représente une vue en axonométrie de la coque et des structures contenant le ballast mobile.
- La Figure 3 représente une vue en axonométrie de la coque, vue de dessous.
- La Figure 4 représente la vue en éclaté partiel du module, dans laquelle les secteurs angulaires du chariot sont en position d'excentricité maximale.
- La Figure 5 représente la vue en éclaté partiel du module, dans laquelle les secteurs angulaires du chariot sont en position d'excentricité minimale.
- La Figure 6 illustre en coupe de détail le principe de liaison entre le chariot et le rail sur lequel ce dernier repose.
- La Figure 7 illustre en perspective le principe de crémaillère à pas variable
- Figure 8 représente en coupe schématique les 4 phases principales du cycle de conversion

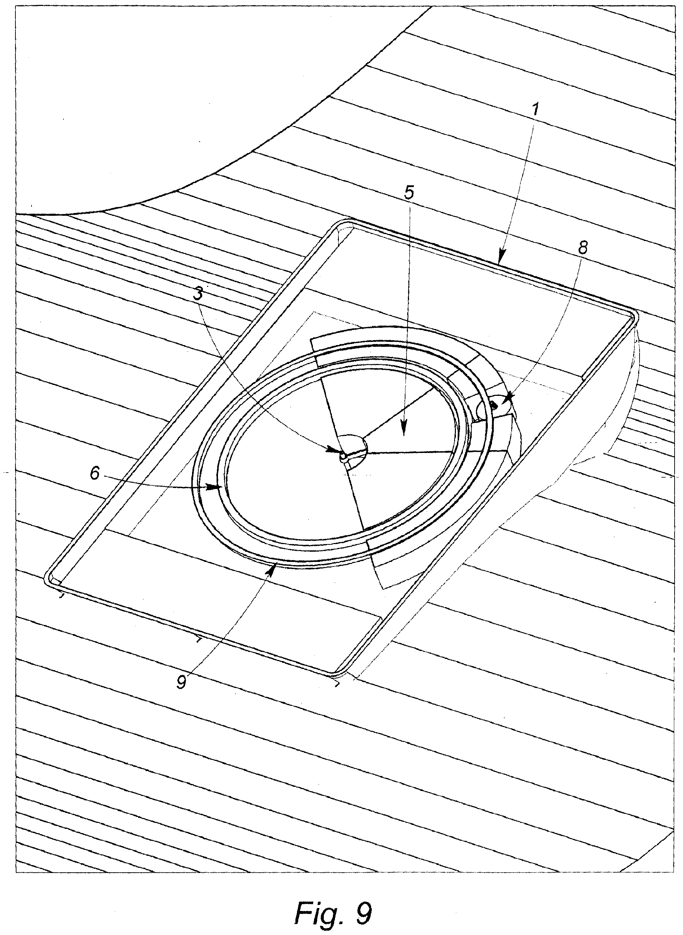

- La Figure 9 représente en éclaté partiel une mise en situation sur l'eau d'un module

Selon l'invention, un module de conversion de puissance houlomotrice comprend une enceinte étanche constituée d'une coque (1) refermée par un couvercle (2), et accueillant un ensemble d'organes électromécaniques, de telle manière qu'aucun élément sensible ne se trouve directement confronté au milieu marin.

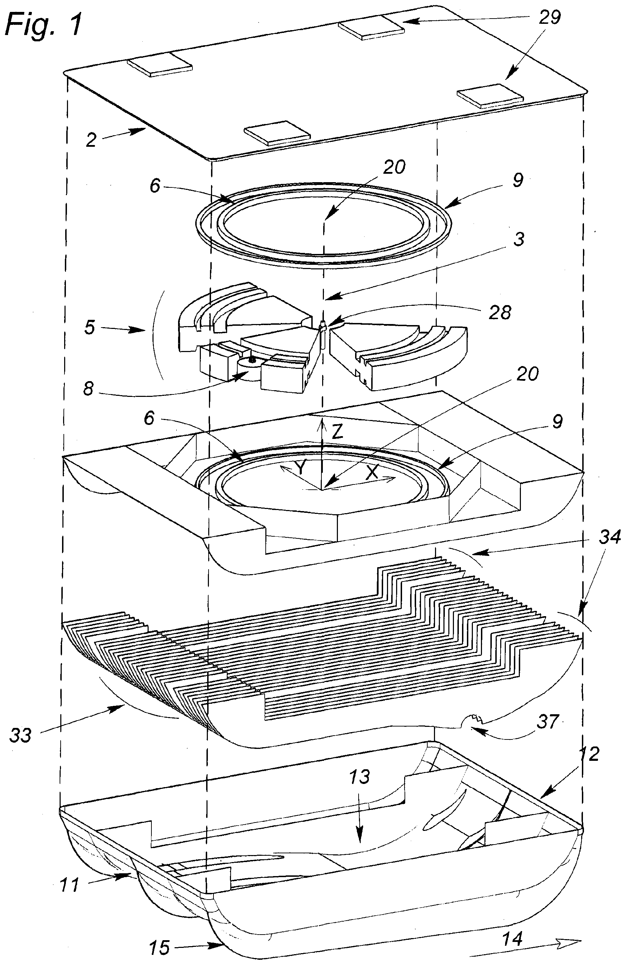

L'enceinte, (1) et (2), telle qu'illustrée par la figure 1, se présente comme un radeau rectangulaire de faible hauteur, aux arêtes adoucies, flottant à la surface de la mer. Le profil hydrodynamique de l'enceinte, et en particulier de la sous-face de la coque (1), est conçu pour favoriser un mouvement de tangage au gré des vagues.

Il est défini un système de coordonnées tridimensionnel fixe par rapport au module, et repéré par trois axes (X, Y, Z), dans lequel la direction moyenne décrite par X, au cours du tangage, coïncide avec la direction de propagation des vagues, la direction moyenne de l'axe Z se confond avec la verticale, et l'axe Y est perpendiculaire aux deux précédents. Le mouvement de tangage, sous l'action des vagues, correspond à un pivotement périodique autour de l'axe Y.

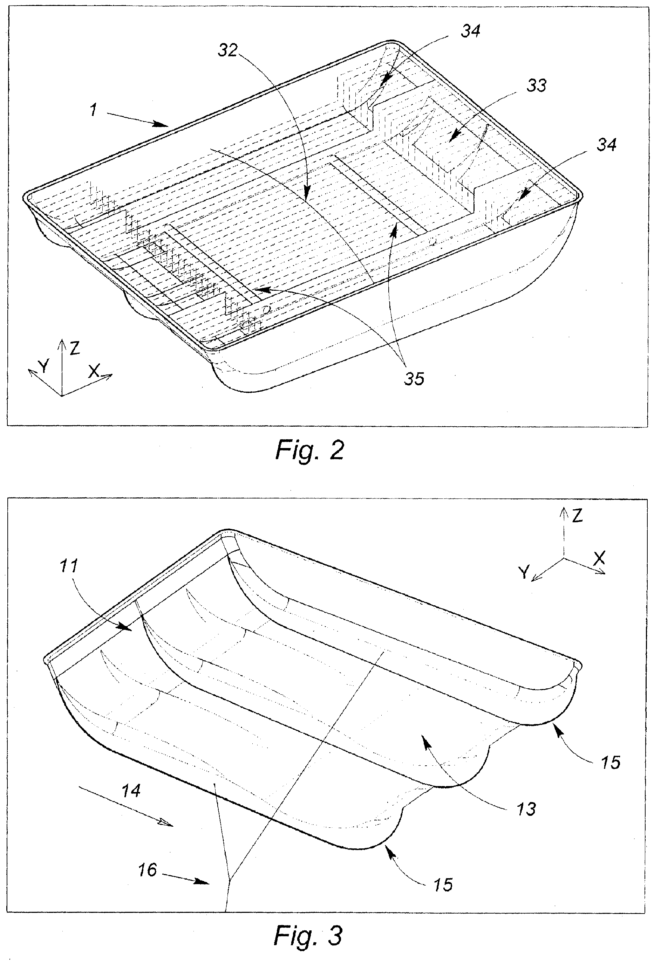

Lorsqu'elle rencontre la coque (1), une vague incidente soulève la proue (11), alors que l'arrière (12) s'enfonce. La proue tire donc avantage d'un profil relevé, en forme de spatule, qui lui permet de se hisser au sommet de la vague plutôt que de l'éperonner. La sous-face de la coque (1), telle qu'illustrée par la figure 3, présente un renflement (13) avantageusement situé vers l'arrière, et qui provoque une dépression, au passage de la vague, par effet Venturi. Cette dépression contribue à aspirer la partie arrière de la coque (1) vers le fond, et ainsi à augmenter l'inclinaison du module sur la vague.

Au sommet de la vague, la coque (1) bascule, et la proue (11) plonge dans le creux de la vague suivante, tandis que la dépression sur le renflement (13) s'estompe avec l'évacuation de la masse d'eau par l'arrière (12), si bien que la poussée d'Archimède ramène ce-dernier vers la surface. Une façon de résonance apparaît. À un enfoncement accru de l'arrière (12), répond une poussée d'autant plus forte, par réaction du support.

Selon l'invention, une telle géométrie de coque (1) possède une direction privilégiée en relation avec le sens propagation des vagues (14). C'est pourquoi, l'invention prévoit l'utilisation d'un jeu de dérives (15) fixées sous la coque (1), et qui assurent une orientation cohérente du module avec le front de vague. Loin d'être néfastes au mouvement général de tangage, les dérives (15) sont susceptibles de canaliser l'écoulement en sous-face de la coque (1) de manière à renforcer l'effet Venturi.
En complément, l'invention comporte un système d'amarrage (16), ou tout autre moyen destiné à maintenir la position géographique du module. Le ou les points d'ancrage des amarres sur la coque (1) sont situés de manière à accompagner son tangage, et non pas à s'y opposer. Dans le cas de l'utilisation d'au moins deux amarres, le système (16) permet, en outre, de faciliter l'orientation correcte de la coque (1). Alternativement, et par exemple dans l'hypothèse où la mer présente une trop grande profondeur, un système de positionnement actif utilisant une motorisation légère et guidé par satellite est également envisageable.

Le couvercle de l'enceinte (2) est aménagé comme une plateforme d'accueil des opérations de maintenance, et comporte, à ce titre, des organes de sécurité tels qu'une ligne de vie, ainsi qu'un ensemble de panneaux démontables incluant des écoutilles (29).

Les dimensions de la coque (1) sont proportionnées à la taille moyenne des vagues auxquelles elle doit faire face, ainsi qu'à l'encombrement du dispositif de conversion qu'elle embarque. A titre d'exemple non limitatif, la longueur de la coque, pour un profil de houle favorable à l'exploitation de la puissance des vagues, est typiquement comprise entre 15 et 30 mètres.

D'après l'invention, le dispositif comprend une masse excentrique en forme de croissant dont le mouvement circulaire autour de l'axe Z est entretenu par le tangage de la coque (1).

Cette masse excentrique se présente avantageusement sous la forme d'un chariot (5) circulant sur un jeu de rails annulaires coaxiaux. Un rail au moins sert de support tandis qu'un ou plusieurs rails complémentaires éventuels assurent le maintien du chariot (5) sur sa trajectoire horizontale. À titre indicatif et nullement limitatif ce jeu de rails est décrit ici sous la forme particulière de deux rails (6) superposés et de même diamètre.

Le contact entre le chariot (5) et les rails (6) est assuré par un ensemble de roulettes (7) portées par des roulements (17). Ces roulements peuvent à leur tour être avantageusement montés sur des suspensions économiques (18) de grande raideur et de faible amplitude, typiquement des rondelles ou des lames ressort, de manière à atténuer l'effet d'éventuelles irrégularités des rails (6) ou de leur dilatation différentielle sous l'action conjointe du soleil et dé la mer.

D'autre part, l'invention entend garantir le roulement sans glissement des roulettes (7) du chariot (5) à la surface des rails (6). À cet effet, les roulettes (7) en contact avec la bande de roulement des rails (19) se présentent comme des troncs de cône dont le sommet coïncide avec le centre (20) de leur bande de roulement respective (19). Ainsi, les axes de l'ensemble des roulettes (7) sont légèrement obliques et concourants en un point situé au centre (20) de la bande de roulement (19).

Pour limiter les frottements générés par les efforts radiaux, le chariot (5) est muni de trains complémentaires de roulettes cylindriques (22) d'axe parallèle à Z. Ces roulettes servent d'appui radial sur les faces latérales (23) des rails (6). À cet effet, ces trains complémentaires (22) sont eux-mêmes avantageusement montés sur des roulements (24) et des suspensions (25), et les faces latérales (23) de chacun des rails (6) sont traitées en bande de roulement.

L'invention prévoit que le rayon des rails (6) est tel que les efforts exercés par le chariot (5) sur les bandes de roulement latérales (23) sont aussi faibles que possibles. En d'autres termes, le chariot (5) est naturellement en équilibre sur le ou les rails de support, et non pas en porte-à-faux. Pour ce faire, le centre de gravité (26) du chariot (5) se trouve à la verticale d'un croissant que délimitent la corde et l'arc décrits par les points de contact avec le ou les rails de support.

La qualité essentielle du matériau composant la masse du chariot (5) est sa densité. Cette exigence s'accorde avec l'utilisation de matériaux de récupération bon marché. À titre indicatif mais nullement limitatif, une masse composite, constitué d'un matériau très économique, typiquement un mélange de gravats et d'objets recyclés coulés dans du béton, et d'un matériau plus dense, et éventuellement plus onéreux, tel une fonte d'acier recyclé occupant un croissant périphérique centré sur l'axe médian du chariot (5) représente une solution économique intéressante.

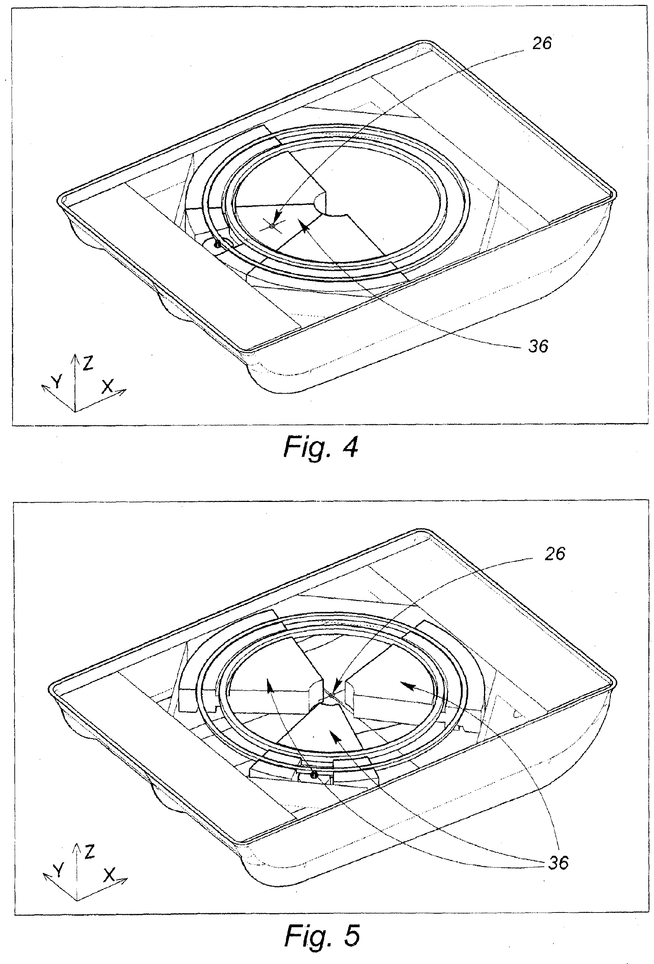

Le chariot (5), tel que décrit ci-dessus, peut être avantageusement scindé en plusieurs secteurs angulaires (36) conçus selon un principe analogue, et rendus indépendants afin de pouvoir être soit regroupés, ainsi que le montre la figure 4, soit éloignés les uns des autres le long des rails (6), ainsi que le montre la figure 5, cet éloignement induisant une réduction de l'excentricité de la masse mobile. Une répartition équilibrée des secteurs (36) au périmètre des rails (6) a pour effet de rapprocher le centre de gravité (26) du chariot (5) de l'axe central (3), facilitant ainsi l'immobilisation du dispositif, et son blocage à l'arrêt au moyen d'un frein. Le déplacement des secteurs (36) les uns par rapport aux autres est assuré par un système motorisé, typiquement constitué de câbles actionnés par des cabestans, ou par des arbres actionnés par des vis sans fin, ou tout autre dispositif commandé pour adapter l'excentricité du chariot (5) à la nature des vagues, une faible excentricité étant adéquate pour initier la mise en rotation, ou en cas de mer calme.

Selon l'invention, le dispositif de conversion comprend un générateur électrique (8) fixé au chariot (5), si bien qu'il participe de sa masse. Le générateur (8), dont l'axe demeure parallèle ou sécant à l'axe central (3) tout au long de son orbite, est pourvu d'un arbre équipé d'un pignon (27) qui engrène sur une crémaillère (9) décrivant un cercle coaxial avec les rails (6). Le déplacement orbital du chariot (5) entraîne donc la rotation rapide de l'arbre du générateur (6).

Le diamètre du pignon (27) est choisi de manière à obtenir un rapport de réduction en accord avec un dimensionnement économique du générateur (8), et en particulier avec un nombre réduit de pôles.

Avantageusement, un second système pignon-crémaillère peut-être mis en oeuvre symétriquement au premier, à l'extrémité opposée de l'arbre du générateur (8), pour mieux répartir les efforts.

Afin de contrecarrer les irrégularités éventuelles des différentes pièces, l'invention lie le générateur (8) au chariot (5) au travers d'un système de suspension qui maintient les pignons (27) en contact avec les crémaillères (9). En complément, le stator du générateur (8) peut avantageusement comporter une ou deux roues folles s'appuyant sur une ou deux des bandes de roulement latérales (23) des rails (6), et servant de guide de profondeur afin d'éviter une pression radiale des pignons (27) sur les crémaillères (9) sous l'action de la suspension du générateur (8). Cette dernière mesure est bénéfique en ce qu'elle réduit les pertes par frottement et minimise l'usure mécanique des ensembles pignon-crémaillère.

D'après l'invention, la connexion électrique du générateur (8) avec la partie statique du module s'effectue au moyen de contacts glissants circulaires (28), typiquement un jeu de bagues ou un système de caténaires.

L'extraction quantitative d'énergie houlomotrice requiert la synchronisation du mouvement du chariot (5) avec celui des vagues. L'invention prévoit un système d'asservissement du générateur (8) qui garantit, en particulier, un profil de vitesse du chariot (5) comportant, au cours de son orbite, un ralentissement à l'approche de chaque extrémité, (11) ou (12), de la coque (1), ainsi que la synchronisation du cycle de conversion avec l'oscillation des vagues. Du fait du régime variable que cette oscillation lui impose, le générateur (8) ne peut pas être directement raccordé au réseau de distribution.

D'après l'invention, une solution avantageuse mais non exclusive consiste à inclure un redresseur électronique dans le dispositif. De cette manière, la transmission de la puissance vers tout poste de consommation ou de distribution, peut s'effectuer à l'aide de câbles sous-marin alimentés en courant continu.

Le cas échéant, un onduleur en bout de ligne, disposé par exemple sur la berge, permet de produire une tension alternative régulée, et donc typiquement compatible avec un raccordement à la grille.

Selon l'invention, le système d'asservissement met en oeuvre au minimum:
- Un capteur de position du chariot (5);
- Un capteur mesurant l'inclinaison instantanée du module;
- Un capteur relevant la fréquence des vagues incidentes;
- Un circuit électronique de pilotage du générateur (8).

Cette configuration minimale peut être avantageusement complétée par des capteurs mesurant les variables électriques du générateur (8) en temps réel, afin de produire une loi de commande plus adaptée.

En adéquation avec la logique d'asservissement précédemment décrite, l'invention peut tirer profit d'un générateur synchrone à excitation séparée (8), qui autorise un contrôle fin de son couple, et par ce moyen, du profil de vitesse du chariot (5). Dans ce cas précis, une alimentation continue, de puissance limitée, et sous le contrôle du système d'asservissement, est employée pour magnétiser l'inducteur du rotor.

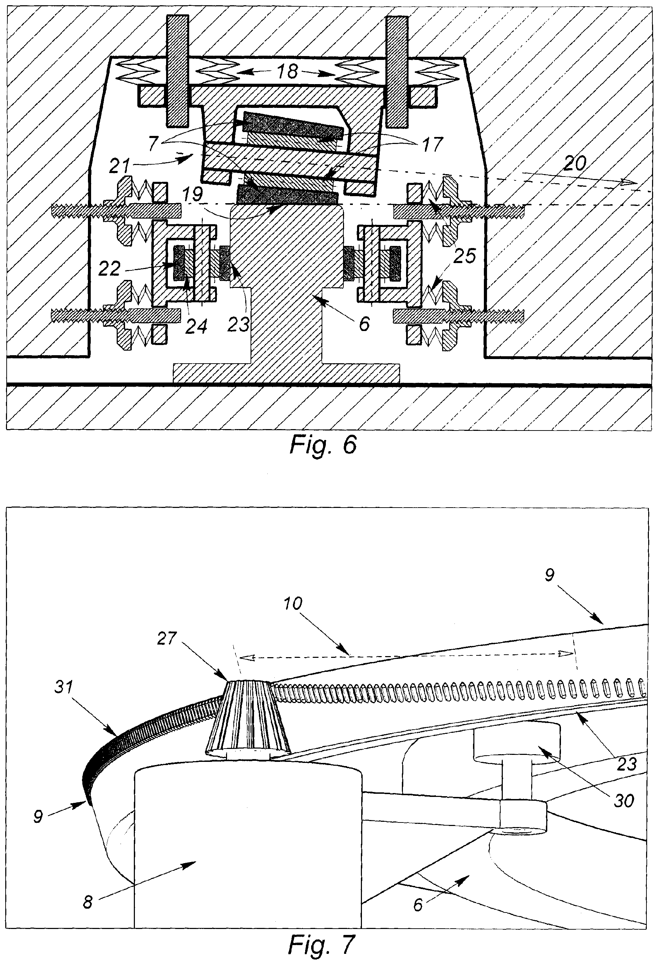

L'invention comprend également un dispositif mécanique optionnel permettant de maintenir une vitesse de rotation du générateur (8) constante, malgré les fluctuations de la vitesse de déplacement du chariot (5) qui l'entraîne : un rapport de réduction variable sur le parcours de l'orbite est obtenu en remplaçant les crémaillères (9) par un dispositif particulier de crémaillères à pas variable, illustré par la figure 7.

D'après l'invention cette disposition spécifique recourt à l'utilisation de pignons tronconiques allongés (27) solidaires de l'arbre du générateur (8). Ces pignons (27) équivalent à un ensemble continu de pignons coaxiaux de diamètres différents. Selon que la piste dentée (31) des crémaillères (9) engrène avec une partie des pignons (27) plutôt qu'une autre, le rapport de multiplication varie. Concrètement, les crémaillères (9) se présentent comme un tronc de cône complémentaire des pignons (27), mais où, en un point donné de la course, les dents (31) n'occupent qu'une petite partie de la génératrice du cône. L'écartement entre ces dents (31) est en accord avec le pas (10) de la partie du pignon (27) qu'elles engrènent.

De cette manière, le pas (10) qui sépare les dents (31), et donc le rapport de réduction des couples pignon-crémaillère, est continûment variable, et permet d'offrir une adaptation mécanique corrélée au profil de vitesse de référence du chariot (5).

En dépit d'une complexité accrue par rapport aux crémaillères à pas fixe, l'atténuation des fluctuations mécaniques perçues par le générateur (8) présente l'avantage d'un fonctionnement plus proche des conditions nominales d'utilisation et ainsi d'un dimensionnement plus économique.

Dans une logique de production intensive, l'invention rend possible la mise en réseau de plusieurs modules sous forme d'un parc. Le regroupement de modules géographiquement proches permet de mutualiser avantageusement des systèmes périphériques, et les opérations de maintenance.

Les modules d'un même parc peuvent être agencés de manière à constituer un maillage à la surface de l'eau grâce à des filins, des chaînes ou des bielles. Ainsi, les moyens de maintien de la position du parc, qu'il s'agisse de points d'amarrage (16) ou de tout autre moyen, peuvent être partagés.

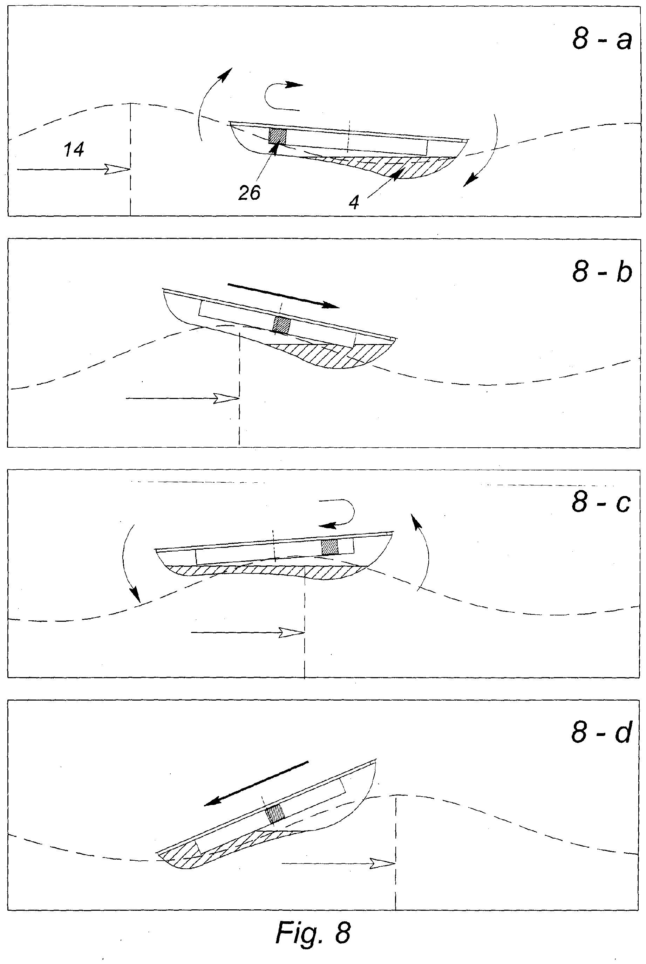

En outre, les moyens de transmission et de mise en forme de la puissance électrique en aval du redresseur de chaque module peuvent être mutualisés afin de bénéficier d'une économie d'échelle. De surcroît, l'utilisation d'un jeu de crémaillères à pas variable, telle que décrite précédemment (Fig. 7), autorise le partage d'un même redresseur, dans la mesure où la fréquence des vagues est commune à tous les modules connectés, ce qui permet le lissage de la puissance de sortie collective. En effet, dans ce cas, la synchronisation des phases du cycle (Fig. 8-a à 8-d) entre les différents générateurs (8) du parc n'est pas nécessaire, et les différents modules peuvent être disposés sur des fronts distincts sans risque d'incohérence électrique.

D'autre part, l'interconnexion des modules en amont du redresseur, autorise une action motrice épisodique du générateur (8), ce qui étend considérablement les stratégies d'asservissement, notamment lors des séquences de mise en mouvement des chariots (5) par faible amplitude de vague.

Par ailleurs, en régime établi, la régularité des cycles de conversion tend à s'améliorer par effet collectif.

D'après l'invention, un dispositif économique de ballast oscillant (4) permet d'améliorer substantiellement l'extraction de puissance.

En vertu de sa masse importante et de son mouvement asservi pour s'opposer à la vague, le chariot (5) atténue sensiblement le tangage du module, ce qui réduit significativement son efficacité. Un contrepoids oscillant se déplaçant en translation suivant la direction X, sous l'action de son propre poids, permet de compenser l'effet du chariot (5) sur le tangage et même d'amplifier ce-dernier.

Selon un mode de réalisation préférentiel, mais nullement limitatif, illustré par la figure 1, l'invention fait usage de tout ou partie des vides de construction du module, en les aménageant comme un ensemble de conduites rectilignes parallèles (32), d'axe X, joignant la proue (11) et l'arrière de la coque (12). Ces conduites (32) sont partiellement remplies d'eau, de manière à constituer un ballast mobile (4) dont l'écoulement oscille naturellement au gré des vagues. Ce dispositif permet, d'une part, d'amplifier le tangage, et d'autre part, d'allonger la durée des phases d'inclinaison maximale, figure 8-b et figure 8-d. L'écoulement rapide du ballast (4) durant les phases d'inclinaison croissante ou décroissante, figure 8-a et figure 8-c, provoque, en effet, sa stagnation temporaire à l'extrémité la plus basse du module. Ainsi, le ballast oscillant (4) contribue à stabiliser les positions d'inclinaison maximale et laisse davantage de temps au chariot (5) pour effectuer sa chute dans des conditions d'inclinaison optimales.

La forme globalement longitudinale des conduites (32) favorise le mouvement de tangage sans contribuer au roulis.

Selon un mode de réalisation judicieux de la présente invention, les conduites (32) contenant le ballast (4) se combinent avec les nervures structurant la coque (1).

L'intérêt d'une telle disposition réside dans les possibilités de réglage économique qu'elle propose. En effet, la proportion d'air dans les conduites (32), détermine le comportement dynamique du ballast (4) qu'elles contiennent.

L'invention prévoit, à ce titre, que les conduites (32) peuvent se répartir avantageusement en plusieurs compartiments distincts. Dans le cas particulier illustré par la figure 1, un premier compartiment (33) occupe la partie médiane de la coque (1), alors qu'un second (34) occupe deux couloirs symétriques de part et d'autre de celle-ci.

L'homogénéité du taux de remplissage des conduites (32) au sein d'un même compartiment est obtenue grâce à des ouvertures (37) pratiquées entre les conduites (32) adjacentes, ainsi qu'à un jeu de canalisations (35), représentées sur la figure 2, qui unissent les deux parties du second compartiment (34).

Selon l'invention, un système de pompage bidirectionnel asservi assure le transfert du ballast (4) entre les compartiments, (33) et (34), et permet ainsi de régler la propension au tangage de l'ensemble pour assurer les conditions d'extraction optimale en fonction des caractéristiques des vagues incidentes. Un compartiment partiellement rempli voit son centre de gravité se déplacer selon l'axe X du module. À l'inverse, un compartiment entièrement plein ou vide est inerte, et ne participe donc pas au tangage.

Le dispositif de pompage du ballast (4) offre ainsi une option de mise en sûreté du module en cas de tempête ou lors d'une opération de maintenance, par le transfert intégral du ballast (4) dans l'un des compartiments, (33) ou (34).

D'après l'invention, une disposition facultative-compatible avec l'ensemble des dispositions qui précèdent, et recourant, au sein d'un même module, à deux systèmes de chariots (5) similaires, mais tournant en sens opposés sur deux jeux de rails (6) distincts, permet d'atténuer significativement le roulis de la coque (1). Dans une telle disposition, en effet, les deux chariots (5) sont asservis de manière à décrire un mouvement symétrique par rapport à l'axe des X, si bien que le centre de gravité de l'ensemble de leurs deux masses n'oscille que suivant cette même direction X.

À titre indicatif, mais nullement limitatif, les deux jeux de rails sont typiquement superposés et coaxiaux, ou coplanaires et symétriques par rapport à l'axe longitudinal, X, du module.

## Revendications

1. Un module de conversion d'énergie des vagues exploitant le mouvement orbital d'une masse excentrique, entièrement contenu dans une enceinte flottante, et **caractérisé en ce qu'**il comporte:
- une coque (1) en forme de radeau rectangulaire,
- un couvercle (2) aménagé en plateforme d'accueil des opérations de maintenance,
- un chariot pesant (5) décrivant une orbite guidée par un jeu de rails circulaires (6),
- un générateur électrique (8) monté sur le chariot (5), et entraîné par un ou plusieurs pignons (27) le long d'un jeu crémaillères (9) coaxiales des rails (6).

2. Un module de conversion de l'énergie des vagues selon la revendication 1, **caractérisé en ce que** la sous-face de la coque (1) est agencée afin de favoriser un mouvement de tangage, et comporte, à ce titre:
- une proue relevée (11),
- un galbe (13) situé à proximité de l'arrière (12),
- un jeu de dérives parallèles (15),
- des points d'ancrage sur l'axe de tangage.

3. Un module de conversion de l'énergie des vagues selon la revendication 2, **caractérisé en ce que** le chariot (5) est maintenu sans glissement sur sa trajectoire grâce à:
- des roulettes de support tronconiques (7) portées par des roulements (17), eux-mêmes sur suspension (18), et
- des roulettes d'appui radial cylindriques (22) portées par des roulements (24), eux-mêmes sur suspension (25).

4. Un module de conversion de l'énergie des vagues selon la revendication 3, **caractérisé en ce que** le générateur électrique (8) est connecté à un redresseur par l'intermédiaire de contact glissants (28), sous forme de bagues ou de caténaires.

5. Un module de conversion de l'énergie des vagues selon la revendication 4, **caractérisé en ce que** le générateur électrique (8) est monté sur suspension, et pourvu d'un train de roues folles (30) servant de butée afin de limiter la pression radiale de l'arbre du générateur (8) sur le jeu de crémaillères (9).

6. Un module de conversion de l'énergie des vagues selon l'une quelconque des revendications précédentes, **caractérisé en ce que** le mouvement du chariot (5) le long de sa trajectoire est asservi par un système comprenant au moins:
- un capteur mesurant l'inclinaison du module;
- un capteur mesurant la position du chariot (5) au moins une fois par cycle;
- un capteur mesurant la fréquence des vagues incidentes;
- un circuit électronique de pilotage du générateur (8);
- un dispositif de freinage permettant d'assurer l'immobilisation totale du chariot (5).

7. Un module de conversion de l'énergie des vagues selon l'une quelconque des revendications précédentes, **caractérisé en ce que** l'excentricité du centre de gravité (26) du chariot (5) est continûment réglable grâce à la répartition de la masse du chariot (5) en secteurs angulaires distincts (36), dont la position relative est asservie.

8. Un module de conversion de l'énergie des vagues selon l'une quelconque des revendications précédentes, **caractérisé en ce qu'**au moins une crémaillère (9) présente un pas continûment variable grâce à une forme de pignon (27) tronconique qui engrène sur une partie de sa hauteur avec les dents (31) de cette crémaillère (9) ; l'espacement entre les dents (31) varie, le long de l'orbite du générateur (8) : plus le diamètre apparent du pignon (27) est grand, plus les dents (31) sont écartées.

9. Un module de conversion de l'énergie des vagues selon l'une quelconque des revendications précédentes, **caractérisé en ce qu'**il comporte un dispositif d'accentuation du tangage, dans lequel un ballast oscillant (4) sous forme d'une masse fluide est mu par son poids dans un ensemble de conduites longitudinales (32) conçues à cet effet.

10. Un module de conversion de l'énergie des vagues selon la revendication 9, **caractérisé en ce qu'**il possède un système de réglage dynamique du ballast oscillant (4), tel que:
- les conduites (32) se regroupent en plusieurs compartiments longitudinaux distincts, permettant un remplissage symétrique par rapport à l'axe médian de la coque (1);
- un ensemble d'ouvertures ponctuelles (37) et de canalisations (35) assurent un niveau de remplissage homogène au sein d'un même compartiment;
- une pompe asservie permet le transfert du ballast (4) d'un compartiment à un autre.

11. Un module de conversion de l'énergie des vagues selon l'une quelconque des revendications précédentes, **caractérisé en ce que** l'association, dans une même enceinte, d'un ensemble double de chariots (5) sur rails (6) tournant en sens contraires permet de limiter le roulis.

12. Un module de conversion de l'énergie des vagues selon l'une quelconque des revendications précédentes, **caractérisé en ce qu'**il forme, en association avec un ensemble de modules analogues, un parc d'exploitation agencé comme un réseau permettant de mutualiser en particulier les moyens de maintien en position, ainsi que les unités de redressement et de transmission électriques.

13. Méthode de production d'électricité par extraction de l'énergie des vagues par un module de conversion selon l'une quelconque des revendications 1 à 12 **caractérisée en ce que** ladite méthode comprend au moins les 4 étapes suivantes :
1) pendant une phase d'inclinaison croissante, sous l'effet d'une vague incidente, la trajectoire du chariot (5) est située vers la proue, où le chariot (5) acquiert de l'énergie potentielle de pesanteur,
2) lorsque l'inclinaison maximale du module est atteinte, le chariot (5) effectue une descente accélérée, durant laquelle son énergie potentielle de pesanteur est convertie en énergie cinétique,
3) pendant une phase d'inclinaison décroissante, après basculement du module sur la crête de la vague, la trajectoire du chariot (5) est située à proximité de l'arrière du module, où il acquiert à nouveau de l'énergie potentielle de pesanteur, et
4) lorsque l'inclinaison est maximale, l'arrière du module étant soulevé par la vague, le chariot (5) accélère et convertit, de nouveau, son énergie potentielle.

14. Méthode de production d'électricité selon la revendication 13, **caractérisée en ce que** l'électricité produite est transmise vers au moins un poste de consommation ou de distribution, préférentiellement à l'aide d'un onduleur permettant de produire une tension alternative régulée en bout de ligne, compatible avec un raccordement à la grille.

15. Utilisation d'au moins un module de conversion selon l'une quelconque des revendications 1 à 12 pour convertir la puissance des vagues en électricité.

## Patentansprüche

1. Wellenenergie-Umwandlungsmodul, dass die Orbitalbewegung einer exzentrischen Masse nutzt, das vollständig in einem schwimmenden, geschlossenen Behälter enthalten ist, **gekennzeichnet durch** folgende Merkmale:
- einen Rumpf (1) in Form eines rechteckigen Floßes,
- eine Abdeckung (2) als Plattform für Wartungen,
- einen schweren Wagen (5), der sich entlang eines Satzes von kreisförmigen Schienen (6) bewegt,
- einen auf dem Wagen (5) angebrachten elektrischen Generator (8), der von einem oder mehreren Ritzeln (27) entlang eines Satzes von Zahnstangen (9) koaxial mit den Schienen angetrieben wird.

2. Wellenenergie-Umwandlungsmodul nach Anspruch 1, **dadurch gekennzeichnet, dass** die Unterseite des Rumpfes (1) angeordnet ist, um eine Nickbewegung zu fördern, und folgende Merkmale umfasst:
- einen aufstehenden Bug (11),
- eine Rundung (13) in der Nähe der Rückseite (12),
- eine Satz von parallelen Finnen (15),
- Verankerungspunkte auf der Nickachse.

3. Wellenenergie-Umwandlungsmodul nach Anspruch 2, **dadurch gekennzeichnet, dass** der Wagen (5) schlupffrei auf seinem Bahn gehalten wird, mittels :
- kegelstumpfförmigen Stützrädern (7), gehalten durch aufgehängte (18) Lager (17), und
- Zylinderrädern (22) zur radialen Abstützung, gehalten durch aufgehängte (25) Lager (24).

4. Wellenenergie-Umwandlungsmodul nach Anspruch 3, **dadurch gekennzeichnet, dass** der elektrische Generator (8) durch Gleitkontakte (28) in Form von Ringen oder Oberleitungen mit einem Gleichrichter verbunden ist.

5. Wellenenergie-Umwandlungsmodul nach Anspruch 4, **dadurch gekennzeichnet, dass** der elektrische Generator (8) aufgehängt ist, und mit einem Satz von Losrädern (30) ausgestattet ist, der als Anschlag dient, um den radialen Druck der Generatorwelle (8) auf den Satz von Zahnstangen (9) zu begrenzen.

6. Wellenenergie-Umwandlungsmodul nach einem der vorhergehenden Ansprüche, **dadurch gekennzeichnet, dass** die Bewegung des Wagens (5) auf seiner Bahn durch ein System gesteuert wird, das mindestens umfasst:
- einen Sensor für die Messung der Neigung des Moduls;
- einen Sensor für die Messung der Position des Wagens (5) mindestens einmal pro Zyklus;
- einen Sensor für die Messung der Frequenz der einfallenden Wellen;
- eine elektronische Schaltung für die Steuerung des Generators (8);
- eine Bremsvorrichtung für die totale Immobilisierung des Wagens (5).

7. Wellenenergie-Umwandlungsmodul nach einem der vorhergehenden Ansprüche, **dadurch gekennzeichnet, dass** die Exzentrizität des Schwerpunktes (26) des Wagens (5) durch die Massenverteilung des Wagens (5) in getrennten Winkelsektoren (36), deren relative Position gesteuert ist, kontinuierlich einstellbar ist.

8. Wellenenergie-Umwandlungsmodul nach einem der vorhergehenden Ansprüche, **dadurch gekennzeichnet, dass** mindestens eine Zahnstange (9) eine kontinuierlich variable Steigung besitzt, mittels eines kegelstumpfförmigen Ritzels (27), der über einen Teil seiner Höhe mit den Zähnen (31) der Zahnstange (9) kämmt; der Abstand zwischen den Zähnen (31) entlang der Umlaufbahn des Generators (8) variiert: je höher der scheinbare Durchmesser des Ritzels (27), desto größer der Abstand zwischen den Zähnen (31).

9. Wellenenergie-Umwandlungsmodul nach einem der vorhergehenden Ansprüche, **dadurch gekennzeichnet, dass** es eine Vorrichtung zur Nickverstärkung aufweist, wobei sich ein oszillierender Ballast (4), in Form einer Fluidmasse, der sich unter der Wirkung seines eigenen Gewichts in einem Satz von dafür konzipierten Längskanälen (32) bewegt.

10. Wellenenergie-Umwandlungsmodul nach Anspruch 9, **dadurch gekennzeichnet, dass** es ein dynamisches Nivelliersystem des Ballasts (4) aufweist, so dass:
- die Leitungen (32) in mehreren, getrennten Längskammer gruppiert sind, die eine symmetrische Füllung im Bezug auf die Mittelachse des Rumpfes (1) erlaubt;
- ein Satz von Öffnungen (37) und Rohren (35) eine homogene Füllung in einer bestimmten Kammer sicherstellt;
- eine Servopumpe die Übertragung des Ballasts (4) von einer Kammer zu der anderen erlaubt.

11. Wellenenergie-Umwandlungsmodul nach einem der vorhergehenden Ansprüche, **dadurch gekennzeichnet, dass** die Vereinigung in einem einzigen Behälter, eines doppelten Satzes von gegenläufig drehenden Wagen (5) auf Schienen (6) die Rollbewegung zu begrenzen hilft.

12. Wellenenergie-Umwandlungsmodul nach einem der vorhergehenden Ansprüche, **dadurch gekennzeichnet, dass** es, zusammen mit einem Satz von ähnlichen Modulen, einen Park bildet, der als Netzwerk angeordnet ist, um eine gemeinsame Nutzung der Mittel für die Aufrechterhaltung der Position sowie eine gemeinsame Nutzung der Vorrichtungen für elektrische Gleichrichtung und elektrische Übertragung zu erlauben

13. Verfahren zur Stromerzeugung aus Wellenenergie mittels eines Umwandlungsmoduls nach einem der Ansprüche 1 bis 12, wobei das Verfahren **dadurch gekennzeichnet ist, dass** es zumindest die folgenden 4 Schritte umfasst:
1) während einer Phase der wachsenden Neigung, unter der Wirkung einer einfallenden Welle, befindet sich die Trajektorie des Wagens (5) in der Nähe von dem Bug, wo der Wagen (5) an potentieller Energie der Schwerkraft gewinnt,
2) wenn die maximale Neigung des Moduls erreicht wird, beschleunigt der Wagen (5) abwärts, während seine potentielle Energie in kinetische Energie umgewandelt wird,
3) während einer Phase der abnehmenden Neigung, nachdem das Modul über den Kamm der Welle gekippt ist, befindet sich die Trajektorie des Wagens (5) in der Nähe der Rückseite des Moduls, wo die potentielle Energie wieder zunimmt, und
4) wenn die Neigung maximal ist, also die Rückseite des Moduls durch die Welle hochgehoben wurde, beschleunigt der Wagen (5) und wandelt wieder seine potentielle Energie um

14. Verfahren zur Stromerzeugung nach Anspruch 13, **dadurch gekennzeichnet, dass** der erzeugte Strom zu mindestens einem Verbrauchspunkt oder Verteilungspunkt übergetragen wird, vorzugsweise mit Hilfe eines Inverters am Ende der Leitung zur Erzeugung einer geregelten Wechselspannung, und damit kompatibel zu einem Netzanschluss

15. Verwendung von mindestens einem Umwandlungsmodul nach einem der Ansprüche 1 bis 12 um Wellenkraft in Elektrizität umzuwandeln.

## Claims

1. A wave energy conversion module exploiting the orbital motion of an eccentric mass, entirely contained in a floating enclosed body, and **characterized in that** it comprises:
- a hull (1) in the shape of a rectangular raft,
- a lid (2) fitted out as a host platform for maintenance operations,
- a weighing carriage (5) moving along an orbit guided by a set of circular rails (6),
- an electrical generator (8) mounted on the carriage (5), driven by one or more pinions (27) along a set of gear racks (9) coaxial with the rails (6).

2. A wave energy conversion module according to claim 1, **characterized in that** the underneath of the hull (1) is arranged so as to favor a pitch motion, and comprises, in this respect:
- a raised prow (11),
- a bulge (13) near the rear-end (12),
- a set of parallel fins (15),
- anchoring points along the pitch axis.

3. A wave energy conversion module according to claim 2, **characterized in that** the carriage (5) is maintained on its path without sliding, by means of:
- frustoconical support rollers (7) held by bearings (17), themselves mounted on suspension (18), and
- radially pressing cylindrical rollers (22) held by bearings (24), themselves mounted on suspension (25).

4. A wave energy conversion module according to claim 3, **characterized in that** the electrical generator (8) is connected to a rectifier via sliding contacts (28), in the form of slip-rings or catenary.

5. A wave energy conversion module according to claim 4, **characterized in that** the electrical generator (8) is suspension mounted, and provided with a set of idler wheels (30) serving as a stop to limit the radial pressure of the generator shaft (8) on the set of gear racks (9).

6. A wave energy conversion module according to any one of the preceding claims, **characterized in that** the movement of the carriage (5) along its trajectory is controller by a system comprising at least:
- a sensor measuring the inclination of the module;
- a sensor measuring the position of the carriage (5) at least once per cycle;
- a sensor measuring the frequency of the incident waves;
- an electronic circuit controlling the generator (8);
- a braking device enabling the total immobilization of the carriage (5).

7. A wave energy conversion module according to any one of the preceding claims, **characterized in that** the eccentricity of the center of gravity (26) of the carriage (5) is continuously adjustable by distributing the mass of the carriage (5) in distinct angular sectors (36), the relative position of which being controlled.

8. A wave energy conversion module according to any of the preceding claims, **characterized in that** at least one gear rack (9) presents a contiguously variable pitch thanks to a frustoconical pinion (27) form which meshes on a part of its height with the teeth (31) of this gear rack (9), the spacing between the teeth (31) varying along the orbit of the generator (8): the larger the apparent diameter of the pinion (27) is, further spaced apart the teeth (31) are.

9. A wave energy conversion module according to any one of the preceding claims, **characterized in that** it comprises a pitch increasing device wherein an oscillating ballast (4) in form of a fluid mass moves due to its weight in a set of longitudinal ducts (32) designed for this purpose.

10. A wave energy conversion module according to claim 9, **characterized in that** it comprises a system for the dynamic adjustment of the oscillating ballast (4) such as:
- the ducts (32) are grouped in several distinct longitudinal compartments, enabling a symmetrical filling relative to the median axis of the hull (1);
- a set of punctual openings (37) and pipes (35) ensures a homogenous filing level within a same compartment;
- a servo pump enables the transfer of the ballast (4) from one compartment to another.

11. A wave energy conversion modules according to any one of the preceding claims, **characterized in that** the combination, in a same body, of a double set of carriages (5) on rails (6) rotating in opposite directions enables to limit the roll motion.

12. A wave energy conversion module according to any one of the preceding claims, **characterized in that** it forms, in combination with a plurality of similar modules, an operating farm arranged as a network allowing to pool in particular the means for position keeping, and the means for electric current rectification and transmission.

13. Method of producing electricity by extraction of wave energy by means of a conversion module according to any one of claims 1 to 12, **characterized in that** said method comprises at least the 4 following steps:
1) during a phase of increasing inclination, under the effect of an incident wave, the trajectory of the carriage (5) is located near the prow (11), where the carriage gains gravitational potential energy,
2) when the maximal inclination of the module is reached, the carriage (5) accelerates downwards, while its gravitational potential energy is converted into kinetic energy,
3) during the phase of decreasing inclination, after the module has tipped over the crest of the wave, the trajectory of the carriage (5) is located near the rear-end of the module, where it gains gravitational potential energy again, and
4) when the inclination is maximale, the rear part of the module being lifted up by the wave, the carriage (5) accelerates, converting its potential energy again.

14. Method of producing electricity according to claim 13, **characterized in that** the produced electricity is transmitted towards at least one consumption or distribution station, preferentially by means of an inverter at the end of the line, producing AC regulated voltage, and thus typically compatible with a connection to the grid.

15. Use of at least one conversion module according to any one of claims 1 to 12 for converting the power of the waves into electricity.
